# EUROPEAN PATENT SPECIFICATION

(11) **EP 2 071 582 B1**
(45) Date of publication and mention of the grant of the patent: **26.02.2014**
(21) Application number: 08170545.1
(22) Date of filing: 03.12.2008
(51) Int. Cl.: G21C 19/105, G21C 3/33, G21C 1/08

(54) **Channel-Lifting Tool and Method**
Kanalhebewerkzeug und -verfahren
Outil et procédé de levage de canal

(30) Priority: 13.12.2007 US 955701
(43) Date of publication of application: 17.06.2009
(73) Proprietor: Global Nuclear Fuel-Americas, LLC, Wilmington, North Carolina 28401 (US)
(72) Inventor: Wazybok, David Francis, Castle Hayne, NC 28429 (US); Smith, David Grey, Leland, NC 28451-9792 (US); Apple, Edward G., Wilmington, NC 28405 (US)
(74) Representative: Cleary, Fidelma

(56) References cited:
- JP-A- 7 159 590
- JP-A- 7 159 591
- US-A- 5 420 899

## Description

### BACKGROUND OF THE INVENTION

The invention relates to tools for use in connection with a nuclear fuel assembly and, more particularly, to a channel-lifting tool for lifting a channel on and off of a nuclear fuel bundle.

A typical nuclear fuel assembly in a boiling light water nuclear reactor includes a lower tie plate, an upper tie plate and a matrix of sealed fuel rods of various length and water rods held in place by spacers supported between the upper and lower tie plates. The fuel rods contain nuclear fuel pellets in sealed containment for supporting a required critical reaction for the generation of steam. A channel is used to surround the upper and lower tie plates, spacers, water rods and fuel rods that make up the nuclear fuel assembly.

Setting the channel is one of the final steps in the assembly of the fuel bundle. The channel setting process involves positioning the channel directly over the fuel bundle and either lowering the channel onto the fuel bundle or by raising the fuel bundle into the channel.

Currently, in order to manipulate the channel, a square stainless steel bar, rounded on it ends, is used with an attached I-bolt that fits between the corners under the channel clips, which are typically located only on two of the four corners of the channel, on opposite sides. The functionality of this tool is sufficient until it encounters the handle located on the upper tie plate near the end of the channel setting process. At this point, the channel must be lifted and/or held up manually by one or two people while the lift bar is removed. This manual lifting or holding the channel up off the lower and upper tie plates is a particular problem with the existing tool. If the channel slips while the tool is being disengaged, an operator's finger can be crushed or severed. Additionally, there are potential quality concerns with manual lifting or holding the channel, including, for example, scratching and/or marking the channel surfaces, distortion of the channel, damaging the finger spring attached to the lower tie plate, damaging the channel clips on the channel if lowered too fast and with too hard of a force onto the upper tie plate, etc.

Japanese Patent Abstract JP 7159590 describes a hoisting device with a pivotable mobile arm, a fixed arm, and a main body including a hoisting section connected to an overhead crane. The length of the arms is such that the main body can sit astride the bail of an upper tie plate of fuel bodies assembled in a channel box. A pair of pivotally mounted holding members are fitted at the lower end sections of the arms and have recesses to receive clip plates of the rectangular channel. The pivotally movable arm can be moved between the clip plate fixing/holding position and the clip plate releasing position.

Japanese Patent Abstract JP 7159591 describes a hoisting device with a pair of clip plate holding members slideably fitted to a frame body and having recesses receiving the clip plates of a channel box. The holding members can slide between the extension position for holding the corresponding clip plates and the withdrawal position for releasing the clip plates. The hoisting device is provided with a pair of legs fitted to the frame body and pivotally movable around the common axis and a handle including a portion connected to a fuel hoisting device.

United States Patent No. 5420899 describes a grapple is provided for use with a fuel bundle channel of a nuclear reactor wherein the channel is provided with a pair of gussets in opposite corners of an upper end of the channel, each gusset having a hole therein. The grapple includes a pair of lever arms, each provided with a lifting foot at a lower end of the respective lever arm. The lever arms are movable in opposite directions to a channel lifting position wherein the channel gripper of each lever arm is located under a respective one of the pair of channel gussets. The channel lifting foot of each lever arm includes a pair of laterally spaced lifting elements such that the lifting feet may engage the underside of the gusset on either side of the gusset hole. In addition, each channel lifting foot includes a secondary foot or slider captured between the pair of lifting elements. The slider includes a hole which can be aligned with the bolt hole in the gusset, permitting a ball lock pin to be inserted into the holes to thereby securely attach the lifting feet to the channel gussets.

It would thus be desirable to provide a channel-lifting tool device that is capable of lifting channels from a storage location and securing the channel while being placed on the fuel bundle prior to assembly as a nuclear fuel assembly. It would also be desirable for the tool to facilitate channelling and the removal of a channel from a nuclear fuel assembly without doing damage to the fuel assembly components.

### BRIEF DESCRIPTION OF THE INVENTION

The present invention resides in a lifting tool for lifting a channel on and off of a nuclear fuel bundle, as recited in the appended claims.

### BRIEF DESCRIPTION OF THE DRAWINGS

There follows a detailed description of embodiments of the invention by way of example only, with reference to the accompanying drawings, in which:
FIG. 1 illustrates a first embodiment of the lifting tool in its locked, lifting position;
FIG. 2 is a plan view of the lifting tool positioned as shown in FIG. 1;
FIG. 3 shows the lifting tool in its pre-lifting, unlocked position;
FIG. 4 is a plan view of the lifting tool shown in FIG. 3;
FIG. 5 is an end view of the lifting tool showing details of the locking mechanism;
FIG. 6 illustrates a lifting tool of an alternative arrangement that does not form part of this invention in its lifting locked position;
FIG. 7 is a plan view of the lifting tool positioned as shown in FIG. 6;
FIG. 8 shows the lifting tool of FIG. 6 in its pre-lifting unlocked position;
FIG. 9 is a plan view of the lifting tool positioned as shown in FIG. 8;
FIG. 10 is a close-up view of the locking mechanism in the alternative arrangement that does not form part of this invention in the lifting locked position; and
FIG. 11 illustrates a conventional nuclear fuel assembly and the many various components that make up the assembly.

### DETAILED DESCRIPTION OF THE INVENTION

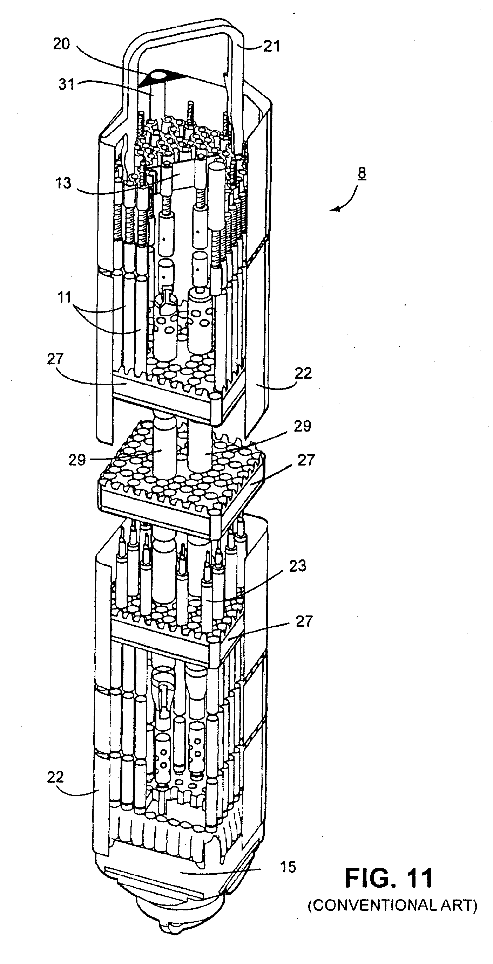

FIG. 11 illustrates a typical boiling light water reactor nuclear fuel assembly and the many various components that go into making the assembly. A typical nuclear fuel assembly in a boiling light water nuclear reactor includes a lower tie plate 15, an upper tie plate 13 and a matrix of sealed nuclear fuel rods, both full length 11 and part-length 23, that are held in place by spacers 27 that help to retain a pair of central located water rods 29 supported between the upper and lower tie plates 13, 15. A square hollow channel 22 is used to surround the upper and lower tie plates 13, 15, spacers 27, water rods 29 and fuel rods 11, 23 that make up the nuclear fuel assembly 8. The upper tie plate has a bail handle 21 that is used to move the nuclear fuel assembly 8 within the reactor core. Each of the square hollow channels 22 is fitted with a single pair of channel clips 20 that are located on opposite corners of the channel 22. One of the two channel clips 20 is designed to have a single hole that allows a channel fastener to retain the channel 22 to the fuel bundle by a threaded post 31 located on one opposite corner of the upper tie plate 13.

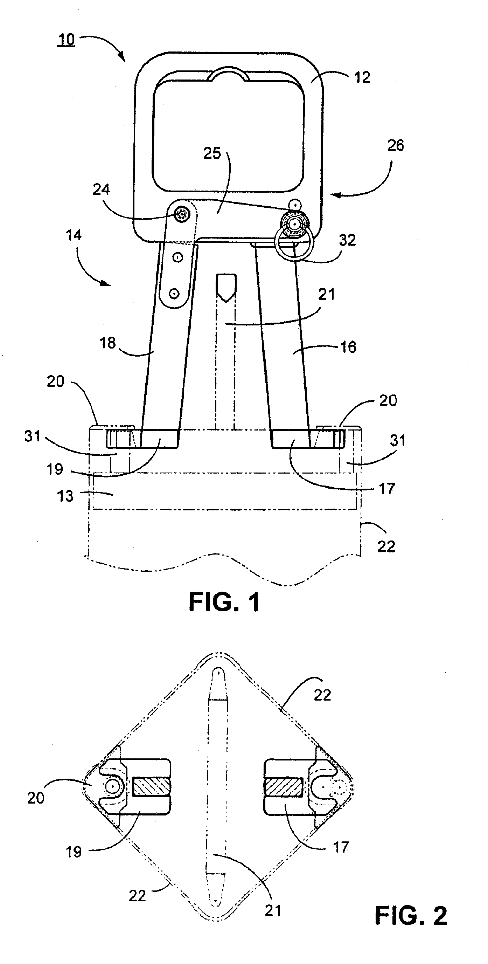

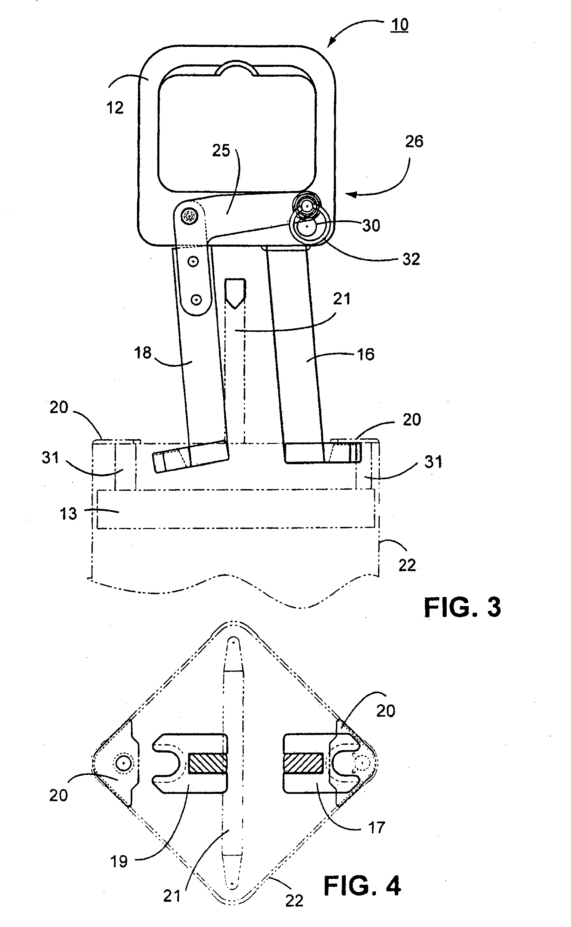

FIGS. 1-5 illustrate an embodiment of a channel-lifting tool 10 for lifting a channel on and off of a nuclear fuel bundle. The channel-lifting tool 10 includes a lifting bail 12, and a leg assembly 14 secured to the lifting bail 12. In this embodiment, the leg assembly 14 includes a stationary leg 16 including a lifting foot 17 at an end thereof and a movable leg 18 including a lifting foot 19 at an end thereof. The lifting feet 17, 19 are selectively engageable with channel clips 20 of a fuel bundle channel 22 and are preferably machined to be fork-like to fit around the upper tie plate 13 threaded support post 31. The lifting feet 17, 19 may also be forged and/or cast as shown in FIGS. 2 and 4 to more securely engage the channel clips 20 on the top of the channel 22. The lifting feet 17, 19 are designed so as to fit under the channel clips 20 to the inside corner areas of the channel 22. The cutouts (forks) in the lifting feet of the channel-lifting tool 10 allow the tooling to surround three sides of the upper tie plate supporting post 31 located on the upper tie plate 13 and used to secure the channel 22 to the fuel assembly 8.

The movable leg 18 is pivotable relative to the stationary leg 16 via a pivot 24. A locking leg 25 is disposed substantially perpendicular to the movable leg 18 and is fixed to the movable leg 18. An end of the locking leg 25 opposite from the pivot 24 is lockable to a leg locking section of the lifting bail 12 via a locking mechanism 26.

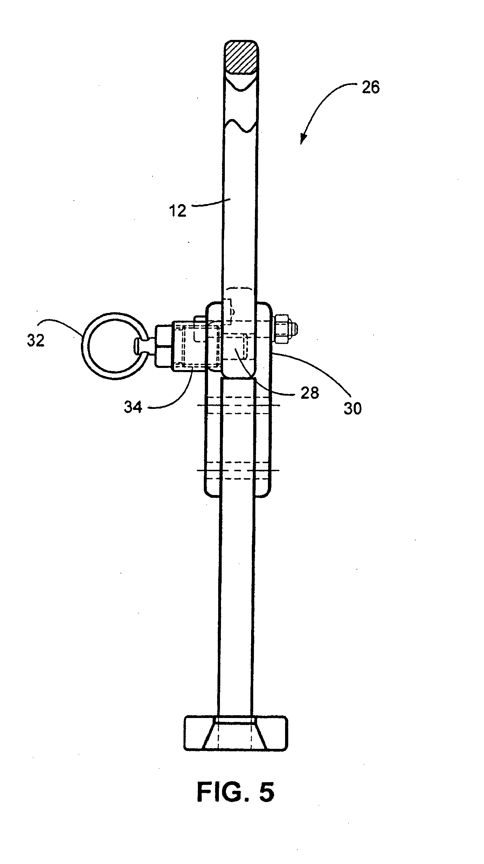

Details of the locking mechanism 26 are shown in FIG. 5. Although any locking mechanism may be used as would be appreciated by those of ordinary skill in the art, in a preferred arrangement, the locking mechanism 26 includes a spring biased locking pin 28, which is biased toward engagement with a pin aperture 30 in the leg locking section of the lifting bail 12. In the locked position, the spring biased locking pin 28 preferably extends substantially the entire way through the lifting bail 12, and an opening through the lifting bail 12 provides a visual acknowledgement that the locking pin 28 is in the locked position when substantially flush to the opposite side of the channel-lifting tool 10. In order to release the spring biased locking pin 28, a ring 32 or other suitable structure enables an operator to pull the spring biased locking pin 28 against a force of a biasing spring 34. Once released, the movable leg 18 is pivotable relative to the lifting bail 12 and the stationary leg 16. See, for example, FIGS. 3 and 4.

In the pre-lifting position shown in FIGS. 3 and 4, the channel-lifting tool 10 has a narrower width with the movable leg 18 pivoted closer to the stationary leg 16. With the narrower width, the channel-lifting tool 10 is insertable into the channel 22 and under the channel clips 20. Once inserted, the movable leg 18 is pivoted (clockwise in FIGS. 1 and 2) until the locking mechanism 26 engages the pin aperture 30 (FIG. 3) in the lifting bail 12 to lock the movable leg 18 in the lifting position as shown in FIGS. 1 and 2. In this position, the lifting feet 17, 19 have a wider width and engage the channel clips 20 for safe lifting of the channel 22. A crane or the like is securable to a gripping section of the lifting bail 12 as part of the channel-lifting tool 10.

In some arrangements, the channel-lifting tool 10 has be orientated to the channel clip 20 that has a single hole, which is aligned with the movable leg 18 of the channel-lifting tool 10, prior to placing the tool under the two channel clips 20 on the top side of the channel 22. This is preferable because once the channel 22 is lifted into the air and above the fuel bundle, it is difficult to see the channel clip 20 with the hole that must be aligned with the threaded support post 31 on the upper tie plate 13, in order to secure the channel 22 to the fuel bundle using the channel fastener that has a male threaded like end plug that secures the channel to the fuel bundle. Thus, in the pre-lifting position, the leg assembly 14 is insertable within the channel 22, in a pre-aligned ordination position with the leg assembly 14 lockable in the lifting position with the location of the channel clip 20 that has a single hole for receiving the channel fastener.

As shown in FIGS. 1 and 3, a length of the leg assembly 14 is preferably greater than a height of the bail handle 21 on the upper tie plate 13 of the nuclear fuel bundle. As such, the channel-lifting tool 10 can remain in place and support the channel 22 until the channel 22 is fully seated on the fuel bundle without the aid of additional operators.

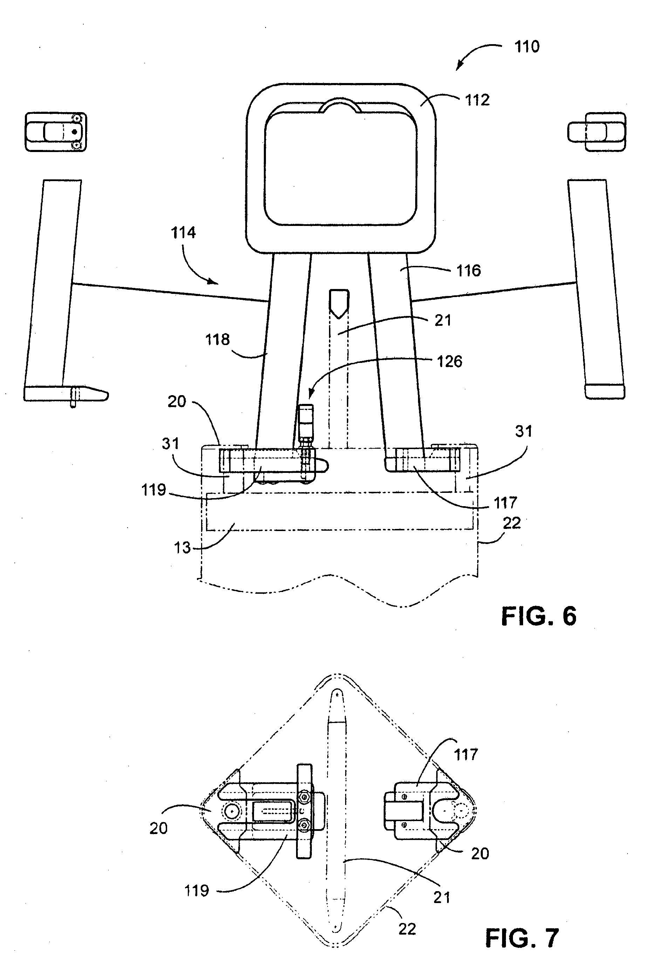

FIGS. 6-10 illustrate an alternative of the channel-lifting tool that does not form part of this invention. In this arrangement, the channel-lifting tool 110 similarly includes a lifting bail 112 and a leg assembly 114. The leg assembly 114 includes lifting legs 116, 118, both of which in this embodiment are stationary to the lifting bail 112. A lifting foot 117 and a movable lifting foot 119 are similarly provided at distal ends of the lifting legs 116, 118, respectively.

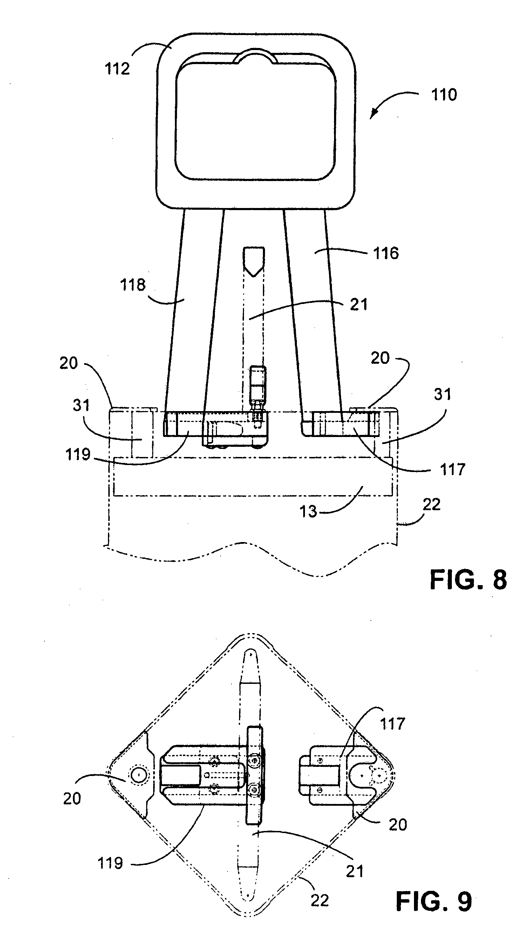

In this arrangement, rather than one of the lifting legs 116, 118 being pivotable relative to the other, a movable lifting foot 119 is displaceable via sliding or the like between a lifting position (FIGS. 6 and 7) and a pre-lifting position (FIGS. 8 and 9).

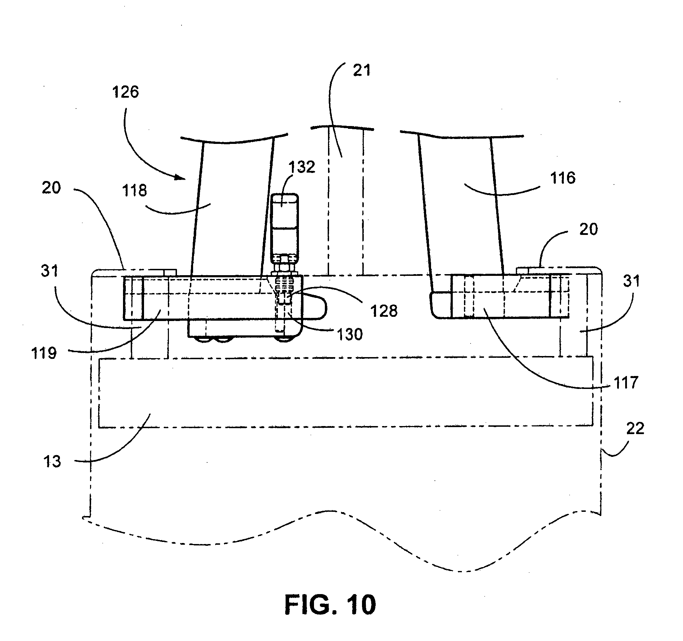

The movable lifting foot 119 is lockable in the lifting position by a locking mechanism 126. With reference to FIG. 10, the locking mechanism 126 includes a spring biased locking pin 128 engageable with an opening 130 in the movable lifting foot 119. A release mechanism 132 is secured to the spring biased locking pin 128 and can be manually pulled to release the spring biased locking pin 128 from the aperture 130 in the movable lifting foot 119. Once released, the movable lifting foot 119 can be slid or otherwise displaced relative to the lifting leg 118. In the pre-lifting position shown in FIGS. 8 and 9, the lifting legs 116, 118 have a width that is narrow enough to be fit within the channel. Once inserted, the movable lifting foot 119 is shifted and locked in the lifting position into engagement with the channel clip 20. Once locked, the lifting tool 110 can be used for lifting a channel onto a fuel bundle and/or off a nuclear fuel assembly 8.

With the structure and methodology of the described channel-lifting tool, the channel setting process in assembling a nuclear fuel assembly is made easier. Additionally, manual lifting of the channel by additional operators is no longer required, thereby improving operator safety. Moreover, scratching and/or marking of the channel surfaces and the possibility of distorting the channel are prevented and eliminated by the use of this tool.

While the invention has been described in connection with what is presently considered to be the most practical and preferred embodiment, it is to be understood that the invention is not to be limited to the disclosed embodiment, but on the contrary, is intended to cover various modifications and equivalent arrangements included within the scope of the appended claims.

## Claims

1. A lifting tool (10) for lifting a channel (22) on and off of a nuclear fuel bundle, the lifting tool comprising:
a lifting bail (12); and
a leg assembly (14) secured to the lifting bail (12), the leg assembly (14) being selectively displaceable between a pre-lifting position and a lifting position, wherein
the leg assembly (14) is lockable in the lifting position, the leg assembly comprising a first movable leg (18) including a first lifting foot (19) attached thereto and a second stationary leg (16) including a second lifting foot (17) attached thereto, wherein in the pre-lifting position, the first movable leg (18) is pivoted closer to the second stationary leg (20) such that the leg assembly (14) is insertable within the channel (22),
**characterized by** a locking leg (25) secured to the first moveable leg (18) the locking leg (25) being disposed substantially perpendicular to the first movable leg (18), and being selectively lockable to the lifting bail (12).

2. A lifting tool according to claim 1, wherein the lifting bail (12) comprises a gripping section and the locking section, and wherein the locking leg (25) is selectively lockable to the leg locking section of the lifting bail (12) in the lifting position.

3. A lifting tool according to claim 2, wherein the locking leg (25) is selectively lockable to the leg locking section of the lifting bail (12) by a spring-biased locking pin (28), the spring-biased locking pin (28) extending substantially entirely through the lifting bail (12), wherein an opening through the lifting bail (12) provides a visual acknowledgement that the locking pin (28) is in the locked position when substantially flush with an opposite side of the channel-lifting tool (10).

4. A lifting tool according to claim 2 or 3, wherein the first movable leg (18) and the locking leg (25) are pivotally secured to the leg locking section of the lifting bail (12) at a pivot connection (24).

5. A lifting tool according to claim 2 or 3, wherein the locking leg (25) is selectively lockable to the leg locking section of the lifting bail (12) by a spring-biased pin (28).

6. A method for lifting a channel (22) on and off of a nuclear fuel bundle with the lifting tool of any of claim 1 to 5, wherein the channel (22) is fitted with a pair of channel clips (20) located on opposite corners of the channel (22), one of the clips (20) having a single hole adapted to receive a channel fastener and wherein in the pre-lifting position, the leg assembly (14) of the lifting tool is insertable within the channel (22) in a pre-aligned ordination position, with the leg assembly (14) lockable in the lifting position, at the location of the channel clip (20) having the hole for receiving the channel fastener.

## Patentansprüche

1. Hebewerkzeug (10) zum Heben eines Kanals (22) auf ein und von einem Kernbrennstoffbündel, das Hebewerkzeug umfassend:
ein Hebegehänge (12); und
eine Schenkelbaugruppe (14), die am Hebegehänge (12) befestigt ist, wobei die Schenkelbaugruppe (14) selektiv zwischen einer Vorhebeposition und einer Hebeposition verschiebbar ist, wobei die Schenkelbaugruppe (14) in der Hebeposition verriegelbar ist, wobei die Schenkelbaugruppe einen ersten beweglichen Schenkel (18) mit einem ersten Hebefuß (19), der daran angebracht ist, und einen zweiten ortsfesten Schenkel (16) mit einem zweiten Hebefuß (17), der daran angebracht ist, aufweist, wobei in der Vorhebeposition der erste bewegliche Schenkel (18) näher am zweiten ortsfesten Schenkel (20) geschwenkt ist, sodass die Schenkelbaugruppe (14) in den Kanal (22) einführbar ist, **gekennzeichnet durch** einen Verriegelungsschenkel (25), der am ersten beweglichen Schenkel (18) befestigt ist, wobei der Verriegelungsschenkel (25) im Wesentlichen senkrecht zum ersten beweglichen Schenkel (18) angeordnet ist und selektiv am Hebegehänge (12) verriegelbar ist.

2. Hebewerkzeug nach Anspruch 1, wobei das Hebegehänge (12) einen Greifabschnitt und den Verriegelungsabschnitt aufweist, und wobei der Verriegelungsschenkel (25) selektiv am Schenkelverriegelungsabschnitt des Hebegehänges (12) in der Hebeposition verriegelbar ist.

3. Hebewerkzeug nach Anspruch 2, wobei der Verriegelungsschenkel (25) selektiv am Schenkelverriegelungsabschnitt des Hebegehänges (12) durch einen Sperrstift (28) mit Federvorspannung verriegelbar ist, wobei sich der Sperrstift (28) mit Federvorspannung im Wesentlichen gänzlich durch das Hebegehänge (12) erstreckt, wobei eine Öffnung durch das Hebegehänge (12) eine visuelle Bestätigung dafür vorsieht, dass sich der Sperrstift (28) in der verriegelten Position befindet, wenn er im Wesentlichen bündig mit einer Gegenseite des Kanalhebewerkzeugs (10) ist.

4. Hebewerkzeug nach einem der Ansprüche 2 oder 3, wobei der erste bewegliche Schenkel (18) und der Verriegelungsschenkel (25) schwenkbar am Schenkelverriegelungsabschnitt des Hebegehänges (12) an einer Schwenkverbindung (24) befestigt sind.

5. Hebewerkzeug nach einem der Ansprüche 2 oder 3, wobei der Verriegelungsschenkel (25) selektiv am Schenkelverriegelungsabschnitt des Hebegehänges (12) durch einen Stift (28) mit Federvorspannung verriegelbar ist.

6. Verfahren zum Heben eines Kanals (22) auf ein und von einem Kernbrennstoffbündel mit dem Hebewerkzeug gemäß einem der Ansprüche 1 bis 5, wobei der Kanal (22) mit einem Paar Kanalklammern (20) ausgestattet ist, die sich an gegenüberliegenden Ecken des Kanals (22) befinden, wobei eine der Klammern (20) ein einzelnes Loch aufweist, das dazu angepasst ist, einen Kanalbefestiger aufzunehmen, und wobei in der Vorhebeposition die Schenkelbaugruppe (14) des Hebewerkzeugs in den Kanal (22) in einer vorausgerichteten Ordinationsposition einführbar ist, wobei die Schenkelbaugruppe (14) in der Hebeposition an der Stelle der Kanalklammer (20) mit dem Loch zum Aufnehmen des Kanalbefestigers verriegelbar ist.

## Revendications

1. Outil de levage (10) pour le levage d'un canal (22) pour le déposer sur un faisceau de combustible nucléaire et le soulever de celui-ci, l'outil de levage comprenant :
une poignée de levage (12) ; et
un ensemble à jambes (14) fixé à la poignée de
levage (12), l'ensemble à jambes (14) pouvant être sélectivement déplacé entre une position de pré-levage et une position de levage, dans lequel l'ensemble à jambes (14) peut être bloqué en position de levage, l'ensemble à jambes comprenant une première jambe mobile (18) comportant un premier pied de levage (19) qui lui est rattaché et une seconde jambe stationnaire (16) comportant un second pied de levage (17) qui lui est rattaché, dans lequel, en position de pré-levage, la première jambe mobile (18) pivote plus près de la seconde jambe stationnaire (20) de sorte que l'ensemble à jambes (14) puisse être inséré dans le canal (22), **caractérisé par** une jambe de blocage (25) fixée à la première jambe mobile (18), la jambe de blocage (25) étant disposée sensiblement perpendiculaire à la première jambe mobile (18) et pouvant être bloquée sélectivement sur la poignée de levage (12).

2. Outil de levage selon la revendication 1, dans lequel la poignée de levage (12) comprend une section de préhension et la section de blocage et dans lequel la jambe de blocage (25) peut être sélectivement bloquée sur la section de blocage de jambes de la poignée de levage (12) en position de levage.

3. Outil de levage selon la revendication 2, dans lequel la jambe de blocage (25) peut être bloquée sélectivement sur la section de blocage de jambes de la poignée de levage (12) par une goupille de blocage (28) sollicitée par un ressort, la goupille de blocage (28) sollicitée par un ressort s'étendant sensiblement entièrement à travers la poignée de levage (12), dans lequel une ouverture à travers la poignée de levage (12) offre une confirmation visuelle que la goupille de blocage (28) est en position bloquée lorsqu'elle est sensiblement de niveau avec un côté opposé de l'outil de levage de canal (10).

4. Outil de levage selon la revendication 2 ou 3, dans lequel la première jambe mobile (18) et la jambe de blocage (25) sont fixées à pivotement à la section de blocage de jambes de la poignée de levage (12) au niveau d'une liaison pivotante (24).

5. Outil de levage selon la revendication 2 ou 3, dans lequel la jambe de blocage (25) peut être bloquée sélectivement sur la section de blocage de jambes de la poignée de levage (12) par une goupille (28) sollicitée par un ressort.

6. Procédé de levage d'un canal (22) pour le déposer sur un faisceau de combustible nucléaire et le soulever de celui-ci avec l'outil de levage selon l'une quelconque des revendications 1 à 5, dans lequel le canal (22) est pourvu d'une paire d'attaches de canal (20) situées sur les coins opposés du canal (22), l'une des attaches (20) ayant un seul trou qui est à même de recevoir une fixation de canal et dans lequel, en position de pré-levage, l'ensemble à jambes (14) de l'outil de levage peut être inséré dans le canal (22) en position d'aménagement pré-alignée, l'ensemble à jambes (14) pouvant être bloqué en position de levage à l'emplacement de l'attache de canal (20) ayant le trou pour recevoir la fixation de canal.
